(19) Europäisches Patentamt

European Patent Office

Office européen des brevets

(11) **EP 4 694 033 A1**

(12) **EUROPEAN PATENT APPLICATION**
published in accordance with Art. 153(4) EPC

(43) Date of publication:
 **11.02.2026 Bulletin 2026/07**

(21) Application number: **24781213.4**

(22) Date of filing: **27.03.2024**

(51) International Patent Classification (IPC):
 **H04L 9/40** *(2022.01)*

(52) Cooperative Patent Classification (CPC):
 **H04L 9/40**

(86) International application number:
 **PCT/KR2024/003840**

(87) International publication number:
 **WO 2024/205223 (03.10.2024 Gazette 2024/40)**

(84) Designated Contracting States:
 **AL AT BE BG CH CY CZ DE DK EE ES FI FR GB GR HR HU IE IS IT LI LT LU LV MC ME MK MT NL NO PL PT RO RS SE SI SK SM TR**
 Designated Extension States:
 **BA**
 Designated Validation States:
 **GE KH MA MD TN**

(30) Priority: **28.03.2023 KR 20230040735**

(71) Applicants:
 • **Hyundai Motor Company**
  **Seoul 06797 (KR)**

• **Kia Corporation**
 **Seoul 06797 (KR)**
• **MYONGJI UNIVERSITY INDUSTRY AND ACADEMIA COOPERATION FOUNDATION**
 **Gyeonggi-do 54538 (KR)**

(72) Inventor: **SHIN, Min Ho**
 **Yongin-si, Gyeonggi-do 17058 (KR)**

(74) Representative: **Isarpatent**
 **Patent- und Rechtsanwälte Partg mbB**
 **Friedrichstraße 31**
 **80801 München (DE)**

(54) **METHOD AND DEVICE FOR SECURING ENDPOINT IN PROTOCOL FOR MANAGING ELECTRIC CAR CHARGING/DISCHARGING INFRASTRUCTURE**

(57)   Disclosed are an endpoint security method and device applicable to a protocol for managing electric car charging/discharging infrastructure. The endpoint security method comprises the steps of: signing at least one key-value pair among elements in the main body of a message to be transferred to a second node of a communication architecture; and transmitting the message including the at least one signed key-value pair to the second node.

【FIG. 21】

**Description**

[Technical Field]

The present disclosure relates to an end-to-end security technology. More particularly, the present disclosure relates to an end-to-end security method and apparatus applicable to a protocol for managing electric vehicle charging and discharging infrastructure.

[Background Art]

A charging station (CS) includes electric vehicle supply equipment (EVSE) for charging and discharging an electric vehicle (EV), and a charging station controller (CSC) for managing the EVSE.

The charging station controller (CSC) performs communication according to a pre-defined communication protocol specification with a charging point operator (CPO), a charging station operator (CSO), or a flexibility operator system (FOS). The communication protocol specification includes the IEC 63110 series and the open charge point protocol (OCPP) of the open charge alliance (OCA). The CSO or a CSO backend includes a charging station management system (CSMS). The CSMS may be a central CSMS or a cloud CSMS.

Transport layer security (TLS) is used to ensure security in communication between the CSC and the CSMS. However, TLS hardly guarantees end-to-end security with respect to a third party, and due to certain security issues inherent in TLS, a vulnerability exists in which charging or discharging billing messages are easily exposed to hacking.

Accordingly, there is a need for a method to enhance security in communication between the CSC and the local CSMS or the cloud CSMS, or between the local CSMS and a resource manager (RM).

[Disclosure]

[Technical Problem]

The present disclosure has been devised to meet the aforementioned demand of the conventional technology. An object of the present disclosure is to provide an end-to-end security method and apparatus that uses signing for all or part of a message, so as to enhance security in communication between a charging station controller (CSC) and a charging station management system (CSMS), or in communication between the CSMS and a resource manager (RM), thereby improving end-to-end trust in a protocol for managing electric vehicle charging and discharging infrastructure.

Another object of the present disclosure is to provide an end-to-end security method and apparatus that uses encryption for all or part of a message, so as to improve end-to-end confidentiality in a protocol for managing electric vehicle charging and discharging infrastructure.

Still another object of the present disclosure is to provide an end-to-end security method and apparatus that uses JSON (JavaScript Object Notation) web signature and JSON web encryption for a JSON message or a part thereof, in a protocol for managing electric vehicle charging and discharging infrastructure.

[Technical Solution]

According to an aspect of an exemplary embodiment, an end-to-end security method by a first node of a communication architecture in a protocol for managing electric vehicle charging and discharging infrastructure includes: signing at least one key-value pair among elements in a body of a message to be delivered to a second node of the communication architecture; and transmitting the message including the at least one signed key-value pair to the second node.

According to an aspect of an exemplary embodiment, an end-to-end security apparatus for performing end-to-end security in a communication architecture in a protocol for managing electric vehicle charging and discharging infrastructure, includes: at least one instruction for end-to-end security; and a processor configured to perform the end-to-end security according to the at least one instruction. The processor is configured to perform: signing at least one key-value pair among elements in a body of a message to be delivered to a second node of the communication architecture; and transmitting the message including the at least one signed key-value pair to the second node.

One of the at least one key-value pair may include a key as a header of the message and a value as a payload of the message.

The processor may be further configured to perform: signing a key path for the at least one signed key-value pair.

In the signing of the key path, a key path value of the signed key path may include a path to a specific element in the body of the message, and a path to a specific sub-element of the specific element in the path to the specific element.

The processor may be further configured to perform at least one of signing the at least one key-value pair, or signing the key path using a digital certificate.

The processor may be further configured to perform: signing an entire header of the message.

The processor may be further configured to perform: signing a range, which is a specific element in a protected header of the message.

The processor may be further configured to perform: binding the at least one signed key-value pair to a payload of the message.

The processor may be further configured to perform: signing the at least one key-value pair using a JSON (JavaScript Object Notation) web token.

The processor may be further configured to perform: encrypting the at least one signed key-value pair using JSON (JavaScript Object Notation) web encryption.

The processor may be further configured to perform: adding a signed key to a protected header of the message.

The processor may be further configured to perform: adding a signed key path to a protected header of the message.

The processor may be further configured to perform: adding a signed key and a signed key path to a protected header of the message.

The first node or the second node may include any one of: a charging station controller (CSC) managing at least one electric vehicle supply equipment (EVSE); a local charging station management system (CSMS) transmitting or receiving the message to or from the CSC; a cloud CSMS transmitting or receiving the message to or from the CSC or the local CSMS; and a resource manager (RM) transmitting or receiving the message to or from the CSC or the local CSMS.

[Advantageous Effects]

According to the present disclosure, end-to-end trust in a protocol for managing electric vehicle charging and discharging infrastructure can be improved by configuring a system to sign a message or a part thereof in communication between a charging station controller (CSC) and a charging station management system (CSMS), or in communication between the CSMS and a resource manager (RM).

In addition, according to the present disclosure, end-to-end confidentiality in a protocol for managing electric vehicle charging and discharging infrastructure can be improved by encrypting a message or a part thereof in communication between the CSC and the CSMS, or in communication between the CSMS and the RM.

In addition, according to the present disclosure, end-to-end security that is robust against hacking can be effectively provided in communication for billing processing and the like between the CSC and the CSMS, or between the CSMS and the RM, by forming JSON Web Signature and JSON Web Encryption for a JSON (JavaScript Object Notation) message or a part thereof in a protocol for managing electric vehicle charging and discharging infrastructure.

[Description of Drawings]

FIG. 1 is a schematic block diagram illustrating a communication architecture capable of employing an end-to-end security method according to an exemplary embodiment of the present disclosure.

FIG. 2 is an exemplary view illustrating a JWS compact as one of the three types of JWS (JSON web signature) serialization used in the end-to-end security method of the present exemplary embodiment.

FIG. 3 is an exemplary view illustrating an application example of the JWS compact shown in FIG. 2.

FIG. 4 is an exemplary view illustrating a JWS JSON as another one of the three types of JWS serialization used in the end-to-end security method of the present exemplary embodiment.

FIG. 5 is an exemplary view illustrating a signature format of the JWS JSON shown in FIG. 4.

FIG. 6 is an exemplary view illustrating a flattened JWS JSON as the remaining one of the three types of JWS serialization used in the end-to-end security method of the present exemplary embodiment.

FIG. 7 is an exemplary view illustrating a request message, CALL, as one of the OCPP-J messages used in the end-to-end security method of the present exemplary embodiment.

FIG. 8 is an exemplary view illustrating a response message, CALLRESULT, as one of the OCPP-J messages used in the end-to-end security method of the present exemplary embodiment.

FIG. 9 is an exemplary view illustrating a response message, CALLERROR, as one of the OCPP-J messages used in the end-to-end security method of the present exemplary embodiment.

FIG. 10 is an exemplary view illustrating an original message for describing a signed OCPP message.

FIG. 11 is an exemplary view illustrating a signed message having a protected header in the original message of FIG. 10.

FIG. 12 is an exemplary view illustrating an original message having an unprotected header in the original message of FIG. 10.

FIG. 13 is an exemplary view illustrating a signed payload of the original message having the unprotected header shown in FIG. 12.

FIG. 14 is an exemplary view illustrating a signing scope of an IEC 63110 message used in the end-to-end security method of the present exemplary embodiment.

FIG. 15 is an exemplary view illustrating a partial signing scope of the IEC 63110 message.

FIG. 16 is an exemplary view illustrating an excluded signing scope of the IEC 63110 message.

FIG. 17 is an exemplary view illustrating a signed key binding problem of an IEC 63110 message used in the end-to-end security method of the present exemplary embodiment, and hacking using such a problem.

FIG. 18 is an exemplary view illustrating a key-path binding problem of an IEC 63110 message used in the end-to-end security method of the present exemplary embodiment, and hacking using such a problem.

FIG. 19 is a diagram illustrating a JWS of an IEC 63110 message used in the end-to-end security method of the present exemplary embodiment.

FIG. 20A is a diagram illustrating a JWE (JSON web encryption) of an IEC 63110 message used in the end-to-end security method of the present exemplary embodiment.

FIG. 20B is an exemplary view illustrating an application example of the JWE of the IEC 63110 message shown in FIG. 20A.

FIG. 21 and FIG. 22 are exemplary views illustrating a combination of a JSON web signature and a JSON web encryption of an IEC 63110 message used in the end-to-end security method of the present exemplary embodiment.

FIG. 23 is a schematic block diagram illustrating another form of a communication architecture capable of employing the end-to-end security method according to the present exemplary embodiment.

FIG. 24 is a schematic block diagram illustrating still another form of a communication architecture capable of employing the end-to-end security method according to the present exemplary embodiment.

FIG. 25 is a schematic block diagram illustrating an end-to-end security apparatus according to another exemplary embodiment of the present disclosure.

[Best mode of the Invention]

For a clearer understanding of the features and advantages of the present disclosure, exemplary embodiments of the present disclosure will be described in detail with reference to the accompanying drawings. However, it should be understood that the present disclosure is not limited to particular embodiments disclosed herein but includes all modifications, equivalents, and alternatives falling within the spirit and scope of the present disclosure. In the drawings, similar or corresponding components may be designated by the same or similar reference numerals.

The terminologies including ordinals such as "first" and "second" designated for explaining various components in this specification are used to discriminate a component from the other ones but are not intended to be limiting to a specific component. For example, a second component may be referred to as a first component and, similarly, a first component may also be referred to as a second component without departing from the scope of the present disclosure. As used herein, the term "and/or" may include a presence of one or more of the associated listed items and any and all combinations of the listed items.

When a component is referred to as being "connected" or "coupled" to another component, the component may be directly connected or coupled logically or physically to the other component or indirectly through an object therebetween. Contrarily, when a component is referred to as being "directly connected" or "directly coupled" to another component, it is to be understood that there is no intervening object between the components. Other words used to describe the relationship between elements should be interpreted in a similar fashion.

The terminologies are used herein for the purpose of describing particular exemplary embodiments only and are not intended to limit the present disclosure. The singular forms include plural referents as well unless the context clearly dictates otherwise. Also, the expressions "comprises," "includes," "constructed," "configured" are used to refer a presence of a combination of stated features, numbers, processing steps, operations, elements, or components, but are not intended to preclude a presence or addition of another feature, number, processing step, operation, element, or component.

Unless defined otherwise, all terms used herein, including technical or scientific terms, have the same meaning as commonly understood by those of ordinary skill in the art to which the present disclosure pertains. Terms such as those defined in a commonly used dictionary should be interpreted as having meanings consistent with their meanings in the context of related literatures and will not be interpreted as having ideal or excessively formal meanings unless explicitly defined in the present application.

Terms used in the present disclosure are defined as follows.

"Electric Vehicle (EV)": An automobile, as defined in 49 CFR 523.3, intended for highway use, powered by an electric motor that draws current from an on-vehicle energy storage device, such as a battery, which is rechargeable from an off-vehicle source, such as residential or public electric service or an on-vehicle fuel powered generator. The EV may include an electric vehicle, an electric automobile, an electric road vehicle (ERV), a plug-in vehicle (PV), an electromotive vehicle (xEV), etc., and the xEV may be classified into a plug-in all-electric vehicle (BEV), a battery electric vehicle, a plug-in electric vehicle (PEV), a hybrid electric vehicle (HEV), a hybrid plug-in electric vehicle (HPEV), a plug-in hybrid electric vehicle (PHEV), etc.

"Plug-in Electric Vehicle (PEV)": An Electric Vehicle that recharges the on-vehicle primary battery by connecting to the power grid.

"Wireless power charging system (WCS)": A system for wireless power transfer, alignment, and communication between a ground assembly (GA) and a vehicle assembly (VA).

"Wireless power transfer (WPT)": A transfer or reception of power between an electric vehicle and a power source, such as a utility, grid, energy storage device, or fuel cell generator, via a contactless method such as electromagnetic induction or resonance.

"Utility": A set of systems which supply electrical energy and include a customer information system (CIS), an advanced metering infrastructure (AMI), rates and revenue system, etc. The utility may provide an EV with energy through rates table and discrete events. Also, the utility may provide information related to certification on EVs, interval of power consumption measurements, and tariff.

"Smart charging": an operation method or system in which electric vehicle charging equipment and/or an electric vehicle communicates with the power grid to optimize the vehicle's charging or discharging rate based on grid capacity or usage cost.

"Interoperability": A state in which components of a system interwork with corresponding components of the system to perform operations aimed by the system. Additionally, information interoperability may refer to capability that two or more networks, systems, devices, applications, or components may efficiently share and easily use information without causing inconvenience to users.

"Inductive charging system": A system transferring energy from a power source to an EV via a two-part gapped core transformer in which the two halves of the transformer, i.e., primary and secondary coils, are physically separated from one another. In the present disclosure, the inductive charging system may correspond to an EV power transfer system.

"Inductive coupling": Magnetic coupling between two coils. The two coils may refer to a ground assembly coil and a vehicle assembly coil.

"OEM (original equipment manufacturer)" may include an electric vehicle manufacturer or a server operated by the electric vehicle manufacturer, and may further include a root certificate authority (CA) or a root certificate server that issues OEM root certificates.

"V2G operator" may refer to a primary actor participating in V2G communication via a transmission protocol, or to an entity responsible for initiating a blockchain and generating a smart contract on the blockchain for automatic authentication of an electric vehicle or an EV user, and may include at least one trusted certificate authority or trusted certificate server.

"Mobility operator (MO)" may refer to one of the entities within a plug and charge (PnC) architecture that enters into a contractual relationship with an EV owner regarding charging, authorization, and payment, allowing an EV driver to charge an EV battery at a charging station, and may include at least one certificate authority or certificate server responsible for issuing and managing its own certificate.

"Charge service provider (CSP)" may refer to an entity that manages and authenticates the credentials of an EV user and provides billing and other value-added services to customers, and may be considered a specific type of MO and implemented in a form integrated with the MO.

"Charging station (CS)" may refer to an entity comprising one or more charging station controllers (CSCs) and one or more electric vehicle supply equipment (EVSE) units, and responsible for transferring energy to or from an EV. The CSC may be a subsystem of the CS that manages one or more EVSEs. The EVSE may further comprise an EVSE controller, an EVSE interface, and a plug.

"Customer energy manager (CEM)" may refer to an internal automation function that optimizes on-site energy consumption and/or production according to customer preferences, based on internal flexibility and external information received via a smart grid connection point (SGCP) and other data resources.

"Electro-mobility authentication identifier (eMAID)" may refer to a unique identifier that links a contract certificate to the payment account of the owner of an electro-mobility device. In this exemplary embodiment, the mobility account identifier may include an identifier of an EV certificate or an identifier of a provisioning certificate. The term eMAID may be replaced by "e-Mobility Account Identifier" or by "contract ID."

"Clearing house (CH)" may refer to an entity that handles cooperation matters among multiple MOs, CSPs, and CSOs, and may particularly serve as an intermediary that facilitates approval, billing, and settlement procedures for EV charging service roaming in connection with different EMSP contracts between two settlement entities or parties. The term "clearing house" may include an e-mobility clearing house (EMOCH).

"Roaming" may refer to a scheme and provision of information exchange that allows EV users to access charging services provided by multiple CSPs or CSOs belonging to multiple mobility networks using a single credential and contract.

"Credential" may refer to a physical or digital asset that represents personal information of an EV or an EV user, and may include cryptographic information used to verify identity, such as a password, a public/private key pair used in public key cryptography, a public key certificate issued by a certificate authority, or information related to a trusted root certificate authority.

"Certificate" may refer to an electronic document that binds a public key to an identifier (ID) through a digital signature.

"Service session" may refer to a set of services related to EV charging at a charging point that is assigned to a specific customer during a defined time frame with a unique identifier.

Exemplary embodiments of the present disclosure will now be described in detail with reference to the accompanying drawings. In the drawings, the same components may be designated by the same reference numerals to facilitate overall understanding of the disclosure, and duplicate descriptions thereof will be omitted for simplicity.

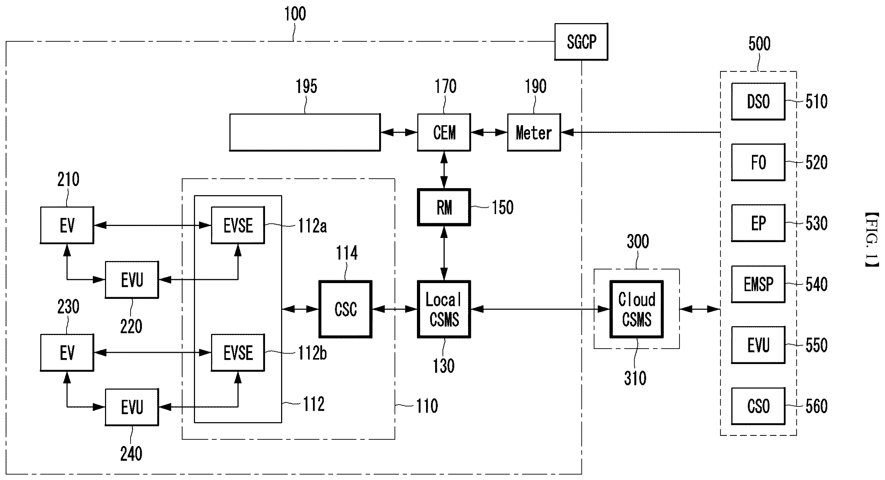

FIG. 1 is a schematic block diagram illustrating a communication architecture capable of employing an end-to-end security method according to an exemplary embodiment of the present disclosure.

As shown in FIG. 1, a communication architecture includes a premises network 100 as a smart grid connection point (SGCP), a charging station operator backend (CSO backend) 300, and a secondary actor (SA) 500. The premises network 100 may be referred to as a local or home network in a specific area.

The premises network 100 may include a charging station (CS) 110, a local charging station management system (local CSMS) 130, a resource manager (RM) 150, and a customer energy manager (CEM) 170. The premises network 100 may further include a meter 190. In addition, the premises network 100 may include a power-related device 195 including loads, an electricity production system, an energy storage, etc.

In the premises network 100, the CS 110 may include one or more electric vehicle supply equipment (EVSE) 112 and one or more charging station controllers (CSC) 114 configured to manage the EVSE 112. The CSC 114 may be a subsystem of the CS 110. The EVSE 112 may include an EVSE controller, an EVSE interface, and a plug. In the present exemplary embodiment, the CS 110 includes two EVSEs, i.e., a first EVSE 112a and a second EVSE 112b; however, the number is not limited thereto, and one or three or more EVSEs may be included in the CS 110.

The first EVSE 112a may exchange power with a first electric vehicle (EV) 210 and communicate with a first EV user (EVU) 220. The first EV 210 and the first EVU 220 may exchange signals and data with each other. Similarly, the second EVSE 112b may exchange power with a second EV 230 and communicate with a second EVU 240. The second EV 230 and the second EVU 240 may exchange signals and data with each other.

In the premises network 100, the local CSMS 130 may exchange messages with the CSC 114, a cloud CSMS 310, and the RM 150 according to a protocol for managing electric vehicle charging and discharging infrastructure (hereinafter referred to as "management protocol"). The message in accordance with the management protocol may include a JSON (JavaScript Object Notation) message as defined by the IEC 63110 standard.

The RM 150 of the premises network 100 may refer to a logical component or entity that is typically implemented in software, which represents the energy flexibility of a single smart device or a group of devices for managing customer energy in buildings or vehicles, and transmits control commands using device-specific protocols.

Here, flexibility may refer to the elasticity of resource usage (demand, storage, generation), consumption adjustment, and/or energy or power generation at an individual or aggregated level in response to external signals (such as price signals or requests) to provide services within an energy system. The RM 150 may exchange messages, signals, and data with the CEM 170 according to a predetermined protocol.

The CEM 170 has an internal automation function that optimizes in-premises energy consumption and/or production based on external information typically received through a smart grid connection point (SGCP) and other data sources, using internal flexibility of the premises network 100 and according to customer preferences. The CEM 170 may include a CEM system. The CEM 170 may be connected for communication with at least one SA 500. The CEM 170 may be an optional component and may be omitted.

The meter 190 may measure the amount of power transferred when power is supplied from the SA 500 to the EVs 210 and 230, loads, storage devices, etc., within the premises network 100, or when power is supplied from the EVs 210 and 230, the electricity production system, etc. within the premises network 100 to the SA 500. The meter 190 may include an accumulated power meter, a bidirectional digital power meter, and the like. The meter 190 may exchange signals and data with the CEM 170 according to a predetermined communication protocol.

The CSO backend 300 may include a charging station management system (CSMS) 310. In this case, the CSMS 310 may include the cloud CSMS 310. The cloud CSMS 310 may exchange IEC 63110 JSON messages with the local CSMS 130.

Accordingly, the end-to-end security method of the present exemplary embodiment may be configured to perform at least one of signing or encryption for a message or a portion thereof transmitted from the cloud CSMS 310 to the local CSMS 130. The end-to-end security method of the present exemplary embodiment may also be configured to perform at least one of signing or encryption for a message or a portion thereof transmitted from the local CSMS 130 to the cloud CSMS 310.

The SA 500 may supply power or provide power-related services under a contract with the premises network 100 or a component thereof. The SA 500 may include a distribution system operator (DSO) 510, a flexibility operator (FO) 520, an electricity supplier (ES), an electricity/energy provider (EP) 530, an electro-mobility service provider (EMSP) 540, an EV user (EVU) 550, a charging station operator (CSO), or other system operators.

The DSO 510 is an entity responsible for the planning, operation, maintenance, and development of a specific region of the distribution network. The specific region of the distribution network may be a low-voltage, medium-voltage, or high-voltage region. The DSO 510 may provide electricity supply (such as power supply, voltage, etc.) and customer access to the electricity provider market, through regulated systems. The DSO 510 may also mediate between two clearing partners to provide roaming verification services in relation to different EMSP contracts.

The FO 520 is an entity responsible for providing at least one service, such as aggregating load flexibility from users of low-voltage and/or medium-voltage grids and trading the aggregated load flexibility with different third parties, including a transmission system operator (TSO) and/or the DSO 510, in order to provide ancillary services or other flexibility markets (e.g., optimization of grid balancing charges).

The EP 530 may refer to an entity or actor that purchases electricity wholesale and resells directly to customers through contracts. The EP 530 may include an EP system. The EP 530 may provide energy-related services. The EP 530 may also generate flexibility by adjusting electricity prices based on usage time, maximum marginal prices, and the like, in the energy market or in pricing for network operation.

The EMSP 540 is an entity that provides high-value services related to EV usage. Such high-value services may include EV rental, parking reservation services, navigation services, energy services, and the like. The EMSP 540 may include a charging station provider (CSP) associated with the CSO 560.

The EVU 550 is an entity that uses a vehicle and provides information needed for the vehicle. The EVU 550 may include an EVU system.

The CSO 560 may refer to an entity connected to the power grid to manage power in order to supply power requested by an electric vehicle. The CSO 560 may be a term equivalent to or included in a charge point operator (CPO) or EMSP, or a term that includes the CPO or EMSP. The CSO, CPO, or EMSP may include at least one certification authority responsible for issuing or managing certificates.

The CSO 560 described above, as one of the SA 500, may include the CSO backend 300. The CSO backend 300 may refer to a means managing a server or database, which are areas of a web application not visible to the user, or a component that performs equivalent functions. The CSO backend 300 may be a subsystem of the CSO 560.

The communication architecture of the present exemplary embodiment represents a basic system overview of a communication architecture in which a single charging station is installed behind the SGCP. The CEM 170 is responsible for optimizing power and energy within the SGCP. The CEM 170 may exchange messages with the local CSMS 130 or the cloud CSMS 310 via the RM 150 that implements the IEC 63110 protocol. The CEM 170 may also connect beyond the scope to other systems based on the behavior of a local or auxiliary user.

All EVSEs 112 are connected to the CS 110 through own communication protocols. The EVUs 220 and 240 may interact with the EVs 210 and 230, the EVSEs 112a and 112b, the CSO backend 300, the CSO 560, and the EMSP 540 through adapted interfaces such as a local display interface or a remote app interface, by exchanging JSON messages. Additional CSs 110 may be provided within the same SGCP or the same premises network 100 under the control of one or more local CSMSs 130. The optional local CSMS 130 may be located within the CS 110 or within another device.

The communication architecture of the present exemplary embodiment may apply at least one of a JSON web signature or a JSON web encryption to a message to enhance security in communication between the CSC 114 and the local CSMS 130, between the local CSMS 130 and the cloud CSMS 310, or between the local CSMS 130 and the RM 150.

In particular, a specific entity in the communication architecture may be configured to sign a key-value pair including a value corresponding to the payload of a message and a key corresponding to the header in the electric vehicle charging and discharging management protocol, or additionally sign a key-path as needed, thereby protecting the message. The entity in the communication architecture may be referred to as a device or a node having communication functionality on a network including the communication architecture.

In this way, in the end-to-end (E2E) security method of the present exemplary embodiment, a message or a portion thereof may be signed for E2E reliability, encrypted for E2E confidentiality, or signed and encrypted for both E2E reliability and confidentiality, in communications between the local CSMS 130 and the CSC 114, between the local CSMS 130 and the cloud CSMS 310, and between the local CSMS 130 and the RM 150. The signing may correspond to a JSON web signature (JWS), and the encryption may correspond to a JSON web encryption (JWE).

According to the above configuration of the end-to-end security method, the issue where the use of transport layer security (TLS) in existing electric vehicle charging and discharging infrastructure management protocols cannot guarantee end-to-end security involving third parties may be resolved. As a result, losses due to hacking during billing caused by certain security issues in TLS may be prevented.

Hereinafter, the above-described IEC 63110 JSON message will be described in more detail.

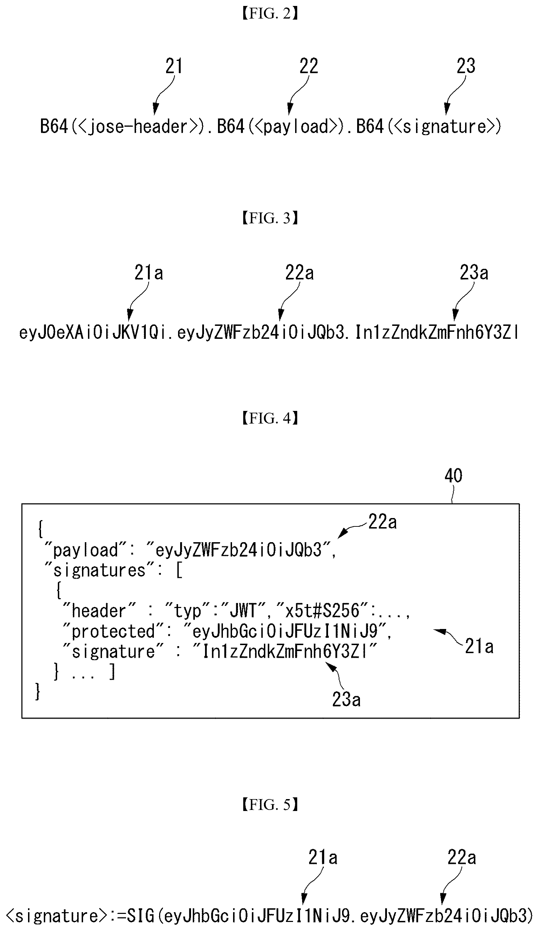

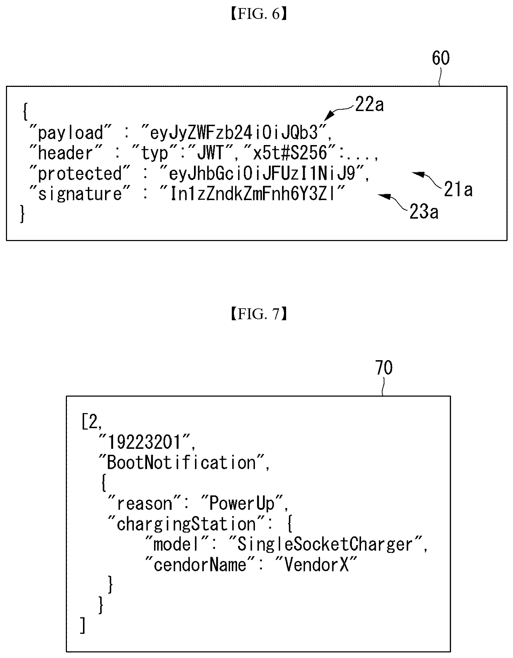

FIG. 2 is an exemplary view illustrating a JWS compact as one of the three types of JWS (JSON web signature) serialization used in the end-to-end security method of the present exemplary embodiment. FIG. 3 is an exemplary view illustrating an application example of the JWS compact shown in FIG. 2. FIG. 4 is an exemplary view illustrating a JWS JSON as another one of the three types of JWS serialization used in the end-to-end security method of the present exemplary embodiment. FIG. 5 is an exemplary view illustrating a signature format of the JWS JSON shown in FIG. 4. FIG. 6 is an exemplary view illustrating a flattened JWS JSON as the remaining one of the three types of JWS serialization used in the end-to-end security method of the present exemplary embodiment.

The JSON object signing and encryption (JOSE) working group of the internet engineering task force (IETF) defines three JSON object formats. The three JSON object formats are JSON web signature (JWS) (RFC 7515), JSON web encryption (JWE) (RFC 7516), and JSON web key (JWK) (RFC 7517). These formats utilize JSON web algorithms (JWA) (RFC 7518) and JSON web token (JWT) (RFC 7519).

JWS includes a JOSE header, a payload, and a signature. The JOSE header includes a type, a signature algorithm, and a certificate.

JWE includes a JOSE header, an encrypted key, an initialization vector (IV), a ciphertext, and a message authentication code (MAC).

JWS and JWE may be represented in three serialization formats. That is, the three serialization formats may include a compact format expressed as BASE64URL strings, a JSON object with multiple keys, and a JSON object with a single key. The JSON object with multiple keys may be expressed as a JWS JSON, and the JSON object with a single key may be expressed as a flattened JWS JSON.

In the serialization using the BASE64URL function, message data is encoded in BASE64 and may be padded to adjust the data size arbitrarily, converted to a URL-safe string, or expressed as B64(<data>) by removing whitespace and encoding with the BASE64URL function.

Describing in more detail the JWS serialization using the BASE64URL function described above, the JWS serialization supports a JWS compact, which includes a single signature 23 related to a header 21 and a payload 22, as shown in FIG. 2. Each of the header 21, the payload 22, and the signature 23 may have a size of 64 bytes. For example, the JWS compact may be constructed by serially connecting B64(<JOSE-header>), B64(<payload>) and B64(<signature>) without whitespace and with each part separated by a period ("."). Here, the signature 23 may be represented as a signature function SIG() having the JOSE header 21 and the payload 22 separated by a period. For example, a message of the serialized JWS compact may have a form where the header 21, the payload 22, and the signature 23 are separated by a period and connected serially without whitespace, as shown in FIG. 3.

In addition, the JWS serialization may be expressed as a message 40 of a JWS JSON having multiple signatures 23a for a protected header 21a and a payload 22a, as shown in FIG. 4. In the JWS JSON, the signature 23a may be represented as a signature function SIG() including a protected header 21a and a payload 22a separated by a period, as shown in FIG. 5. The JOSE header 21a may be represented as a union of an unprotected header and a protected header.

Further, as shown in FIG. 6, the JWS serialization may be configured to generate a message 60 of a flattened JWS JSON or, briefly, a flattened JSON, including a protected header 21a, a payload 22a, and a signature 23a for the protected header 21a, the payload 22a. The JOSE header 21a may be represented as a union of an unprotected header and a protected header.

The JWE JSON serialization expresses JWE as a JSON object. The JWE JSON serialization allows multiple parties to encrypt the same content. However, this method is not currently optimized for compressibility or URL (Unified Resource Location) safety.

In the aforementioned JWS and JWE serialization methods, compact and JSON have the configurations of size, header protection, and number of signatures as shown in Table 1, but do not support the open charge point protocol (OCPP). The flattened JSON supports OCPP but does not use a protected header, and for compact, a single signer signs a single key-value pair with one signature, thereby not being applied in cases requiring multiple signatures.

[Table 1]

| Methods | Size | Header protection | # of signatures | OCPP |
|---|---|---|---|---|
| Compact | Small | Entirely | One | X |
| JSON | Large | Partly | Many | X |
| Flattened JSON | Medium | Partly | One | Yes |

Accordingly, the present exemplary embodiment provides an end-to-end security method using a JWE compact or a JWE JSON that may be used with OCPP and the like. The end-to-end security method of the present exemplary embodiment may be used for end-to-end security in a protocol for managing electric vehicle charging and discharging infrastructure. Hereinafter, the above open charge point protocol (OCPP) message (hereinafter referred to as "OCPP-J message" or "OCPP message") will be described.

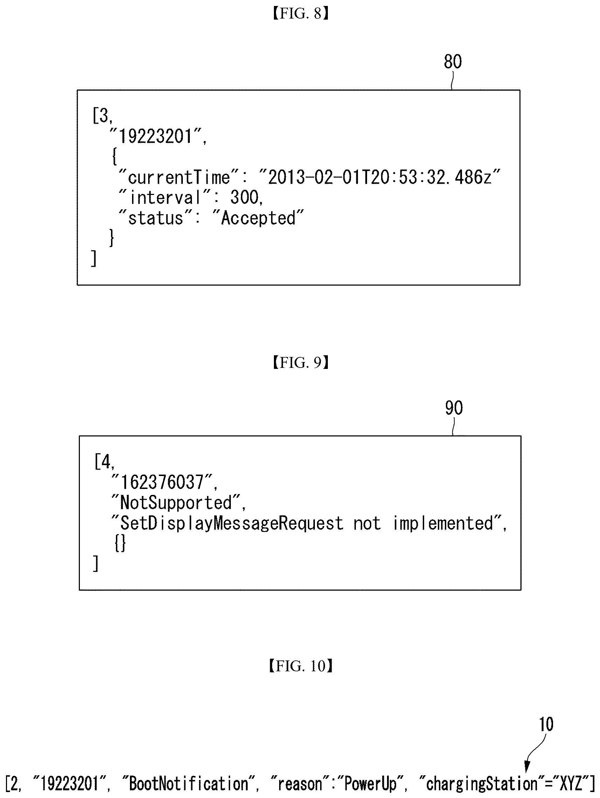

FIG. 7 is an exemplary view illustrating a request message, CALL, as one of the OCPP-J messages used in the end-to-end security method of the present exemplary embodiment. FIG. 8 is an exemplary view illustrating a response message, CALLRESULT, as one of the OCPP-J messages used in the end-to-end security method of the present exemplary embodiment. FIG. 9 is an exemplary view illustrating a response message, CALLERROR, as one of the OCPP-J messages used in the end-to-end security method of the present exemplary embodiment.

An OCPP-J message may have versions such as OCPP 1.6J or OCPP 2.1J, and may include message forms of CALL (request), CALLRESULT (response), and CALLERROR (response).

CALL (request) is a request message representing a call and includes a message type identifier (MessageTypeId), a message identifier (MessageId), an action (Action), and a payload (Payload). For example, as shown in FIG. 7, the action in CALL (request) may include a boot notification (BootNotification), and the payload may include a reason such as powerup and charging station (CS) information. The charging station information may include a charger model such as a single socket charger and a vendor name (vendorName) such as "VendorX."

CALLRESULT (response) is a response message representing the result of a call and may include a message type identifier (MessageTypeId), a message identifier (MessageId), and a payload. For example, as shown in FIG. 8, the payload in CALLRESULT (response) may include a current time (currentTime), an interval such as 300 seconds, and a status such as "Accepted."

CALLERROR (response) is a response message representing a call error and may include a message type identifier (MessageTypeId), a message identifier (MessageId), an error code (ErrorCode), an error description (ErrorDescription), and error details (ErrorDetails). For example, as shown in FIG. 9, in CALLERROR (response), the error code may be expressed as "NotSupported," the error description may be expressed as "Set display message request not implemented," and the error details may be represented as an empty structure ({ }) indicating no content.

In the above-described CALL (request), CALLRESULT (response), and CALLERROR (response), the message type identifier may be set, for example, to 2, 3, and 4 respectively in the stated order, and the message identifier may be set, for example, to "19223201," "19223201," and "162376037" respectively in the stated order. The message types of CALL (request), CALLRESULT (response), and CALLERROR (response) may be briefly represented as CALL, CALLRESULT, and CALLERROR, respectively.

The above-described signed OCPP message may include additional elements for end-to-end security among a charging station (CS), a charging station management system (CSMS), a local controller, and a third party.

That is, the signed OCPP message may include a signed action (SignedAction) and a signed payload (SignedPayload), in which only a portion of the message including a message type identifier (MessageTypeId), a message identifier (MessageId), an action (Action), and a payload (Payload) is signed. Here, the signed action (SignedAction) may be expressed in the form of "<Action>-Signed," and the signed payload (SignedPayload) may be expressed in a flattened JWS JSON serialization with a protected header. The protected header may include an action recorded in an OCPPAction field, a message type identifier recorded in an OCPP MessageTypeId field, and a certificate (SHA256-of-Signing-Certificate) signed using an encryption algorithm such as SHA (secure hash algorithm)-256.

The processing of the signed OCPP message may be configured to check whether signing is optional, and when signing is supported, to respond with a signed message.

The signed OCPP message may use encryption algorithms such as ES256, RS256, and RS384. ES256 indicates an elliptic curve digital signature algorithm (ECDSA) using P-256 and SHA-256, RS256 indicates RSASSA-PKCS1-v1_5 using SHA-256, and RS384 indicates RSASSA-PKCS1-v1_5 using SHA-384.

Table 2 below shows the encryption algorithms available for use in the signed OCPP message.

[Table 2]

| "alg" Parm Value | Digital Signature or MAC algorithm |
| --- | --- |
| HS256 | HMAC using SHA-256 |
| HS384 | HMAC using SHA-384 |
| HS512 | HMAC using SHA-512 |
| RS256 | RSASSA-PKCS1-v1_5 using SHA-256 |
| RS384 | RSASSA-PKCS1-v1_5 using SHA-384 |
| RS512 | RSASSA-PKCS1-v1_5 using SHA-512 |
| ES256 | ECDSA using P-256 and SHA-256 |
| ES384 | ECDSA using P-384 and SHA-384 |

(continued)

| "alg" Parm Value | Digital Signature or MAC algorithm |
| --- | --- |
| ES512 | ECDSA using P-512 and SHA-512 |
| PS256 | RSASSA-PSS using SHA-256 and MGF1 with SHA-256 |
| PS384 | RSASSA-PSS using SHA-384 and MGF1 with SHA-384 |
| PS512 | RSASSA-PSS using SHA-512 and MGF1 with SHA-512 |
| none | No digital signature or MAC performed |

In Table 2, the parameter value (Parm Value) of the algorithm ("alg") field in the signed OCPP message may indicate a specific digital signature algorithm or a message authentication code (MAC) algorithm. That is, with respect to the parameter value, HSxxx represents a hash-based message authentication code (HMAC) using SHA-xxx, RSxxx represents RSASSA-PKCS1-v1_5 using SHA-xxx, ESxxx represents an elliptic curve digital signature algorithm (ECDSA) using P-xxx and SHA-xxx, and PSxxx represents RSASSA-PSS using SHA-xxx and MGF1 with SHA-xxx. Here, RSASSA-PKCS1 indicates the RSA Signature Scheme with Appendix as defined in Public-Key Cryptography Standards #1, and includes RSASSA-PKCS1-v1_5 indicating version 1.5. RSASSA-PSS indicates the RSASSA-Signature and Encryption Schemes. Meanwhile, a parameter value of "none" indicates that no digital signature or message authentication code (MAC) is performed. Examples of the above-described signed OCPP message will be described with reference to FIGS. 10 to 13.

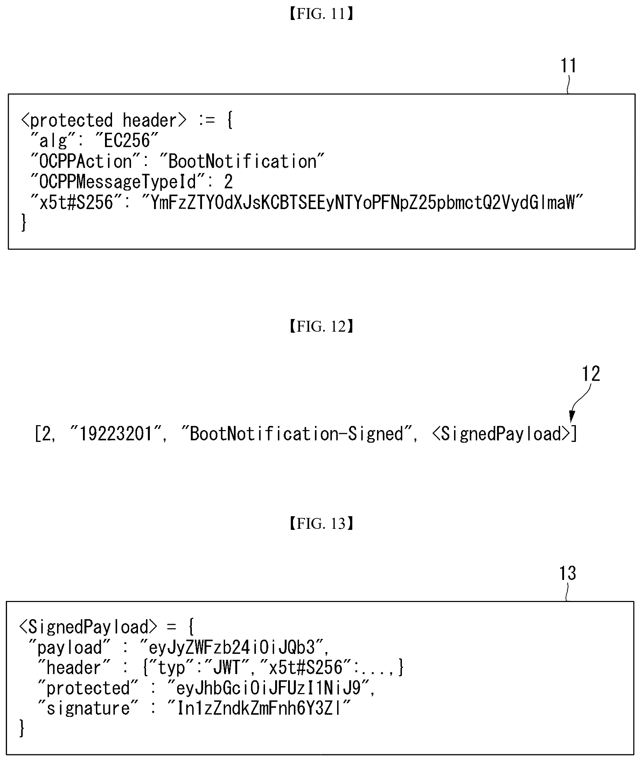

FIG. 10 is an exemplary view illustrating an original message for describing a signed OCPP message. FIG. 11 is an exemplary view illustrating a signed message having a protected header in the original message of FIG. 10. FIG. 12 is an exemplary view illustrating an original message having an unprotected header in the original message of FIG. 10. FIG. 13 is an exemplary view illustrating a signed payload of the original message having the unprotected header shown in FIG. 12.

As shown in FIG. 10, when an original message 10 has a structure including a message type identifier, a message identifier, an action, and a payload, the signed OCPP message may have a structure including a message type identifier, a message identifier, a signed action, and a signed payload.

For example, as shown in FIG. 11, a signed message 11 may express an OCPP message type identifier (OCPPMessageTypeId) as "2," a signed action corresponding to an OCPP action (OCPPAction) as "BootNotification," and a signed payload ("x5t#S256") as a hash value of a signed certificate encrypted using an EC256 encryption algorithm, according to the parameter value of the encryption algorithm ("alg"). The hash value may be expressed, for example, as "YmFzZTY0dXJsKCBTSEEyNTYoPFNpZ25pbmctQ2VydGlmaW."

In addition, when the original message has an unprotected header, the original message may be converted into a signed message 12 as shown in FIG. 12. That is, the signed message 12 may be generated to include elements such as a message type identifier (MessageTypeId), a message identifier (MessageId), a signed action, and a signed payload (SignedPayload).

In the present exemplary embodiment, the signed action is exemplified as a signed boot notification (Boot-Notification-Signed), but the structure of the present disclosure is not limited to this example.

As shown in FIG. 13, the signed payload (SignedPayload) 13 may include a payload, a header, a protected value, and a signature. Here, the header may include information such as a type (typ) set to JWT (JSON Web Token) and a parameter value (e.g., "x5t#S256") for an encryption algorithm such as EC256.

As described above, the OCPP message allows signing only for the entire message, not a part of the message. The message identifier is not signed. That is, when a third party is the signer, the message ID may not be known. In addition, the OCPP message supports only {128,192}-bit security and does not support multiple signatures. Multiple signatures refer to support for multiple algorithms, multiple keys, or multiple signers. Furthermore, it does not support end-to-end encryption.

Therefore, the conventional OCPP may not be directly applied to management protocols or the like of electric vehicle charging and discharging infrastructure for end-to-end security. In particular, the existing OCPP may not be directly applied in cases where partial signing of a message is required, selection of signature algorithms based on security levels is desired, multiple signatures are needed to achieve secure environments such as end-to-end security and interoperability, or selective encryption of the entire or partial message is supported.

Meanwhile, the IEC 63110 standard document stipulates that an extensible messaging and presence protocol (XMPP) message be used to transmit messages among primary actors. XMPP is an application profile of extensible markup language (XML) that enables the exchange of structured but extensible data among multiple actors in near real-time.

XMPP operates as a message broker and is based on a distributed architecture of XMPP servers, which allows clients to exchange messages with payloads even if they are connected to different XMPP servers. End-to-end routing of messages depends on inter-server communication within the XMPP network. XMPP provides session layer functionality and protects the client from the actual transport layer.

In the IEC 63110-2 standard, XMPP is used as the communication layer, introduced to clearly distinguish the services provided by XMPP from the lower layers of the protocol stack. XMPP itself uses a TLS (transport layer security) connection over TCP/IP (transmission control protocol/internet protocol) as the transport layer.

The aforementioned XMPP message includes a JSON header and a JSON body. In this case, signing of the entire JSON message is not necessarily required. For example, since the JSON header is protected by TLS and is not part of end-to-end communication, signing the JSON header is generally unnecessary.

As such, the end-to-end security apparatus of the present exemplary embodiment may be configured to sign the entire JSON body or specific elements thereof. Signing of the entire JSON body or parts thereof may be used when a message from a third party is delivered to a CS/CSMS, or when a message from a CS/CSMS is delivered to a third party. Here, the signer, including the CS, the CSMS, the RM, or the third party, may be aware of the full content of the body.

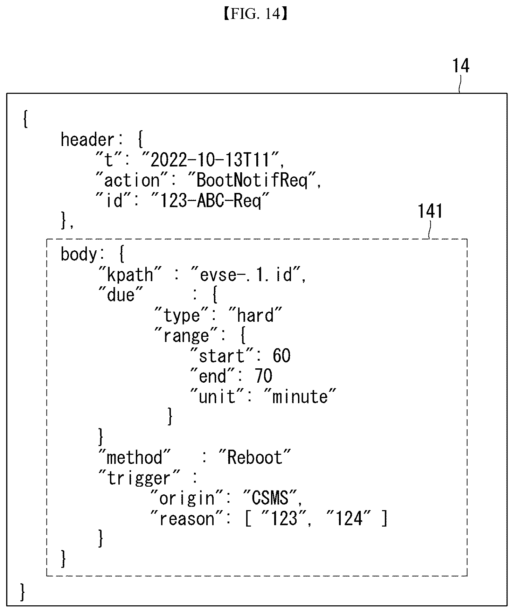

Hereinafter, a more detailed description will be given of a configuration for implementing the end-to-end security method by performing partial signing on the XMPP message, with reference to FIGS. 14 to 18.

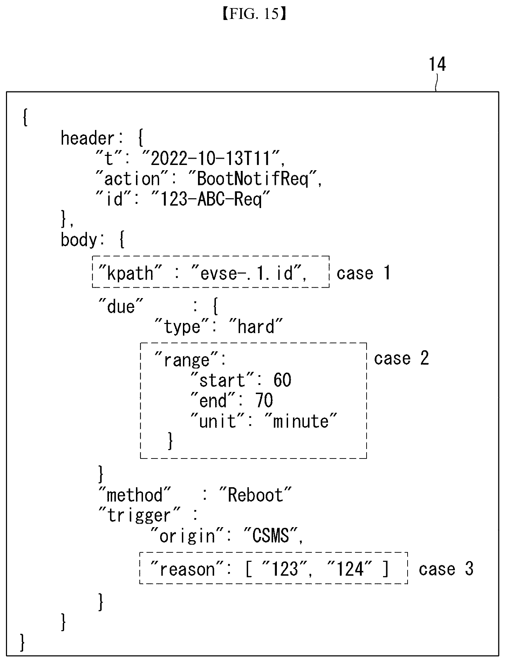

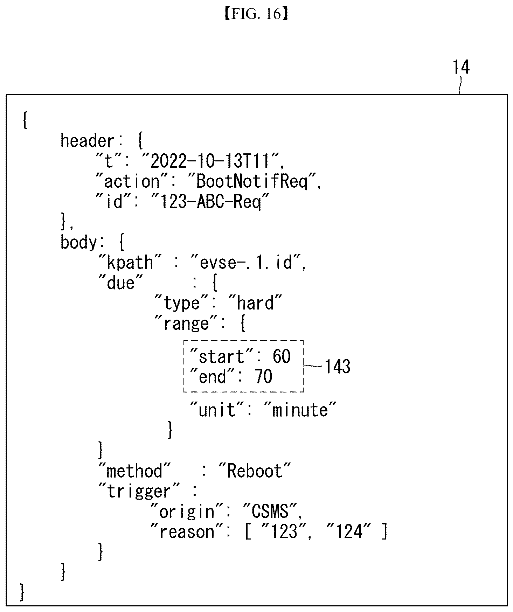

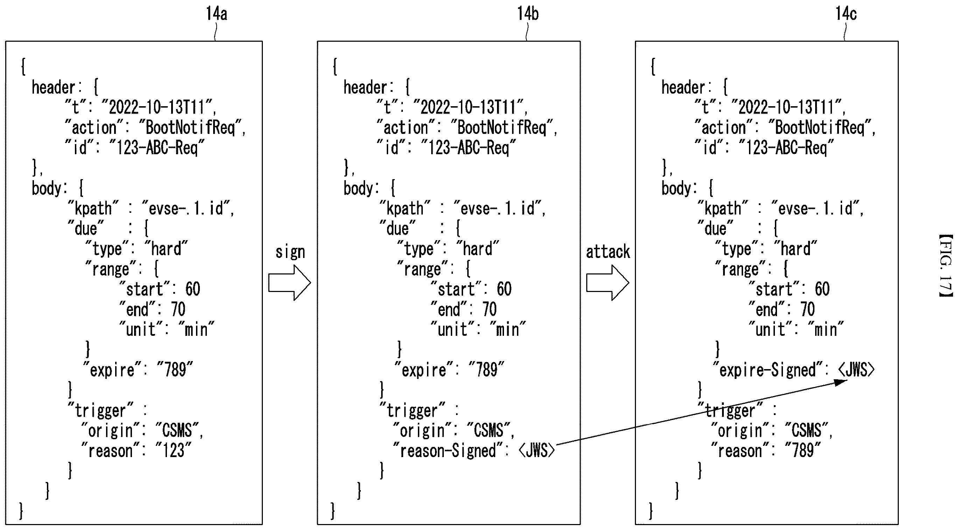

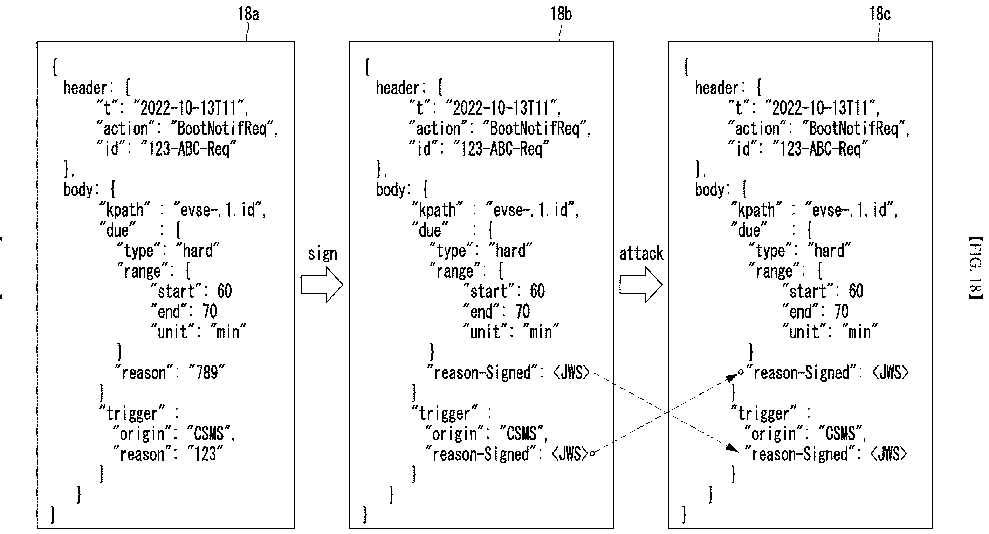

FIG. 14 is an exemplary view illustrating a signing scope of an IEC 63110 message used in the end-to-end security method of the present exemplary embodiment. FIG. 15 is an exemplary view illustrating a partial signing scope of the IEC 63110 message. FIG. 16 is an exemplary view illustrating an excluded signing scope of the IEC 63110 message. FIG. 17 is an exemplary view illustrating a signed key binding problem of an IEC 63110 message used in the end-to-end security method of the present exemplary embodiment, and hacking using such a problem. FIG. 18 is an exemplary view illustrating a key-path binding problem of an IEC 63110 message used in the end-to-end security method of the present exemplary embodiment, and hacking using such a problem.

As shown in FIG. 14, the end-to-end security apparatus may be configured to sign the entire body 141 as a form of partial signing on a JSON message 14 belonging to an XMPP message.

In addition, as shown in FIG. 15, the end-to-end security apparatus may be configured to selectively sign specific elements in the body of the JSON message 14.

For example, the end-to-end security apparatus may be configured to sign a key-path (kpath) in case 1. The end-to-end security apparatus may be configured to sign a time range in case 2. The time range may include subfields such as a start, an end, and a unit, and the unit may be set to minutes. The end-to-end security apparatus may also be configured to sign a reason of a trigger in case 3. The trigger field may include an origin corresponding to a subfield referring to a specific actor such as a CSMS, and a reason corresponding to a subfield storing a specific value such as a predefined code (e.g., "123," "124").

The end-to-end security apparatus of the present exemplary embodiment may be configured to perform partial signing for any one or a combination of the above cases 1 to 3.

Meanwhile, the end-to-end security apparatus may be configured to exclude certain elements from the signature scope of partial signing, such as a range corresponding to a subfield of a due field and a reason corresponding to a subfield of a trigger field included in the body. The reason for excluding the range and the reason from the signature scope is that signing multiple key-value pairs at once may be complicated. Therefore, as needed, the end-to-end security apparatus may be configured to bind multiple key-value pairs into a key pair or to respectively sign.

In another form of partial signature scope, since signing multiple key-value pairs at once may be complicated, as shown in FIG. 16, the end-to-end security apparatus may be configured to bind the multiple key-value pairs into a single key pair or to respectively sign. In this case, the signature may be replaced with at least one period.

In another form of partial signature scope, when it is difficult to bind a signature to an object, the end-to-end security apparatus may be configured to sign the JSON object.

Such partial signing may basically refer to signing a single key-value pair. In this case, a signer including a CS, a CSMS, an RM, or a third party may be aware of the key-value pair at the time of signing. Accordingly, the end-to-end security apparatus of the present exemplary embodiment may be configured to add a signature to a JSON message and bind the signature to the payload. A signed range may be added as a JSON Web Token (JWT). In this way, the end-to-end protection method of the present exemplary embodiment may be configured to sign the original key "range" in the protected header to prevent a signature shift issue. This method may also be applied to OCPP messages.

As shown in FIG. 17, the above-described partial signing may be vulnerable to external attacks such as hacking due to a signed key binding problem, that is, the absence of binding between a JWS signature and the signed key allows an attacker to replace the signed key (e.g., "reason-Signed": <JWS>) with an expired signature (e.g., "expire-Signed") and insert an arbitrary reason value (e.g., "789"). To address this vulnerability, the end-to-end security apparatus may be configured to add the signed key to the JOSE protected header.

As shown in FIG. 18, the above-described partial signing may have a key-path binding problem, that is, a JWS signed message may be vulnerable to external attacks of rearranging locations due to the absence of binding between the locations of multiple signed keys. To address this key-path binding problem, the end-to-end security apparatus may be configured to add the key path of the signed key to the JOSE protected header.

As such, in the present exemplary embodiment, when performing JSON web signing on a JSON message, the system may be designed to use either JWS compact serialization or JWS JSON serialization. According to this configuration, key spoofing attacks caused by the above-described signed key binding problem or key-path spoofing attacks caused by the key-path binding problem may be prevented.

Hereinafter, a more detailed description will be given of a JSON web signature process in a message according to the IEC 63110 standard.

First, taking the JWS compact as an example, the end-to-end security apparatus may be configured to sign a key-value pair in which a header serves as the key and a payload serves as the value, and to sign a key-path as needed. The end-to-end security apparatus may also be configured to assume a digital signature with a digital certificate. Furthermore, the end-to-end security apparatus may be configured to sign the entire JOSE header so that no unprotected header exists.

The end-to-end security apparatus may use ES256, ES512, or the like as the signature algorithm. Here, ES256 refers to an encryption algorithm that uses an elliptic curve with sep256r1, SHA256, and 128-bit security, and ES512 refers to an encryption algorithm that uses an elliptic curve with sep512r1, SHA512, and 256-bit security.

Describing in more detail the method of signing a JWS compact message, the end-to-end security apparatus may first remove the payload to sign the payload corresponding to the key of the key-value pair. Then, the end-to-end security apparatus may add a JWS token as a signed key.

The JWS token may be generated as "B64(<jose-header>).B64(<payload>).B64(<signature>)."

An example format of a header (<jose-header>) included in the above-described JWS token is shown in Example 1 below.

[Example 1]

$$\text{<jose-header>} = \{$$

$$\text{"typ"} = \text{"JWT"},$$

$$\text{"alg"} = \text{"<alg>"},$$

$$\text{"signed-key"} = \text{"<key>"},$$

$$[\text{"signed-key-path"} = \text{"<key-path>"},]$$

$$[\text{"signer"} = \text{"<signer's name/id>"},]$$

$$[\text{"x5u"}: \text{<x.509 cert url>},]$$

$$[\text{"x5c"}: \text{<x.509 cert chain>},]$$

$$[\text{"x5t#S256"}: \text{<x.509 cert sha256>},]$$

$$\text{<any custom key/vals>}...$$

$$\}$$

In addition, a signature <signature> included in the JWS token may have a format such as "SIG(B64(<jose-header>).B64(<payload>))".

In addition, in the header (refer to Example 1) included in the JWS token, a key path (<key-path>) of a signed key path ("signed-key-path") may be generated as shown in Example 2.

[Example 2]

$$\text{<key-path>} := \{ \text{<key-1>}: \{ \text{<key-2>}: ... \{ \text{<key-n>}: \{ \text{<key>}: \{\} \}\}\}...\}$$

In Example 2, the key path (<key-path>) represents the exact location of the signed key-value pair in the message.

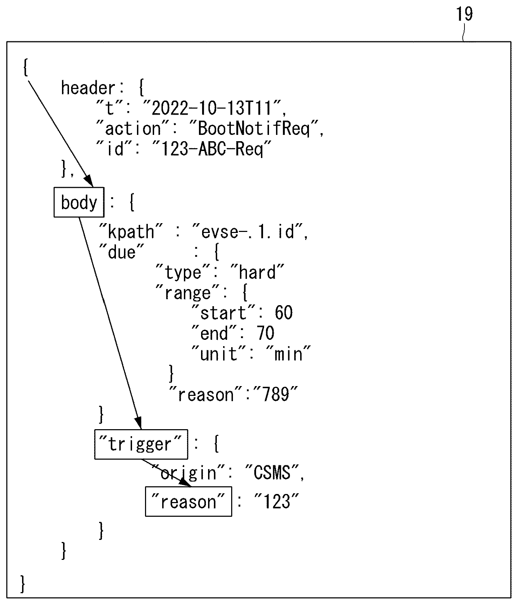

As illustrated in FIG. 19, the signed key path in the message 19 may be defined as {"body":{"trigger":

{"reason":{}} }}.

Thereafter, describing a method of signing a JWS JSON, the end-to-end security apparatus may remove a key from a payload in the message and may add a signed key (<key>-signed) signed in the form of a JWS token.

The JWS token may include a "payload" and "signatures". The "signatures" may include a "protected" header and a "signature". A format of a header (<jose-header>) may be the same as that described in Example 1. The signature (<signature>) may have a format such as "SIG(B64(<jose-header>).B64(<payload>))".

An example of the above-described JWS token is shown in Example 3.

[Example 3]

$$<\text{JWS token}> := \{$$

"payload": "B64(<payload>)",

"signatures": [ {

"protected": "B64(<jose-header>)",

"signature": "B64(<signature>)"

} ... ]

}

As described above, in the JWS JSON message, end-to-end security may be implemented using a JWS token that signs a protected header and a signature as a pair.

The following describes JWE encryption that may be used for end-to-end security in management protocols of electric vehicle charging and discharging infrastructure.

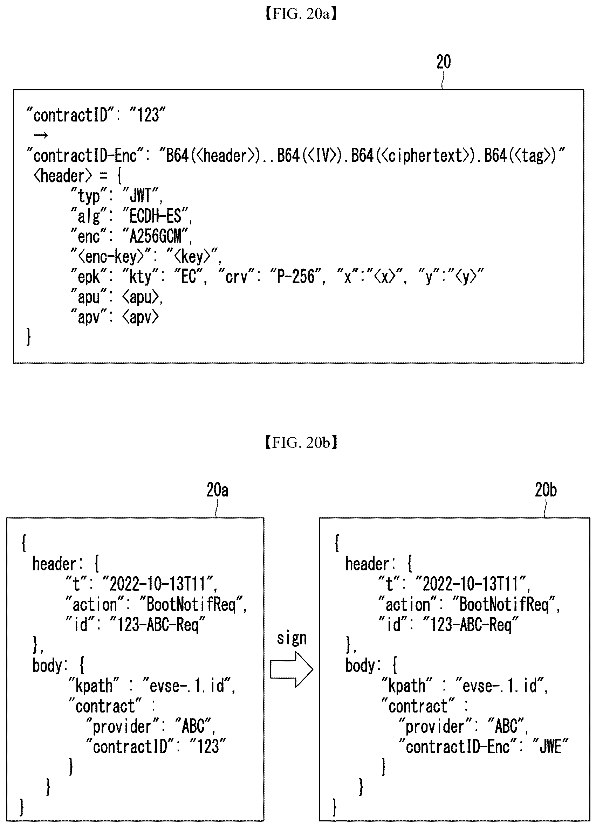

FIG. 20A is a diagram illustrating a JWE (JSON web encryption) of an IEC 63110 message used in the end-to-end security method of the present exemplary embodiment. FIG. 20B is an exemplary view illustrating an application example of the JWE of the IEC 63110 message shown in FIG. 20A.

In the present exemplary embodiment, the end-to-end security apparatus may use JSON compact encryption for JWE encryption. The JWE compact encryption excludes encryption with multiple keys for multiple recipients. For JWE encryption, the end-to-end security apparatus may be configured to replace a key and payload pair in a message with an encrypted key and a JWE.

That is, the end-to-end security apparatus may add an element of "<key>-Encrypt:<JWE>" in place of a "<key>:<payload>" element in a JWE message. The added JWE element may have a format as shown in Example 4.

[Example 4]

$$<\text{JWE}> = \text{B64}(<\text{jose header}>)$$

.B64(Encrypt(<encryption-key>))

.B64(<Initialization vector>)

.B64(Encrypt(<payload>))

.B64(<authentication tag>)

As seen from Example 4, the <JWE> used for key encryption may have a serialized form in which elements such as a header (<jose header>), an encryption-key encryption (Encrypt(<encryption-key>)), an initialization vector (<initialization vector>), a payload encryption (Encrypt(<payload>)), and an authentication tag (<authentication tag>) are separated by periods (.). Here, an element of the encryption-key encryption B64(Encrypt(<encryption-key>)) may be used in a key wrapping method.

An example of the header (<jose header>) used in the <JWE> for key encryption is shown in Example 5.

[Example 5]

```
<jose-header> := {

"typ": "JWT",

"alg": <key alg>,    // key exchange or key wrapping algorithms

"epk": <epk>,        // curve & public key

"apu": B64(<apu>),

    "apv": B64(<apv>),

    "enc": <cipher>,    // payload encryption algorithm

        }
```

As an application example of JWE encryption, as shown in FIG. 20A, the end-to-end security apparatus may encrypt a specific element ("contractID":"123") in a JWE original message using a format such as shown in Example 6.

[Example 6]

```
"contractID-Enc": "B64(<header>)..B64(<IV>).B64(<ciphertext>).B64(<tag>)"
```

That is, the JWE encryption may include a process in which an element ("contractID":"123") in the original message 20a is converted and added in the form of "contractID-Enc:<JWE>" in the encrypted message 20b, as illustrated in FIG. 20B.

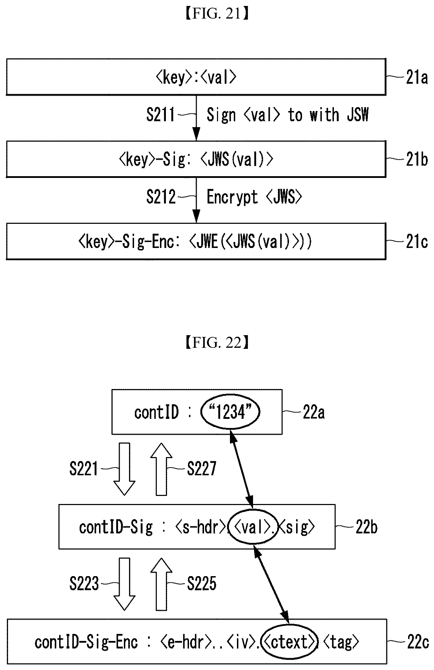

FIG. 21 and FIG. 22 are exemplary views illustrating a combination of a JSON web signature and a JSON web encryption of an IEC 63110 message used in the end-to-end security method of the present exemplary embodiment.

As shown in FIG. 21, the end-to-end security apparatus may sign a value (<val>) of a key-value pair "<key>:<val>" 21a in a JSON message with a JSON web signature (JWS) in step S211, and may encrypt the signed JWS value (<key>-Sig:<JWS(val)>) 21b with a JSON web encryption (JWE) in step S212. According to this process, the end-to-end security apparatus may generate an element of an encrypted signed JWS value (<key>-Sig-Enc:<JWE(<JWS(val)>)>) 21c. The generated element may be inserted into a message used in management protocols of electric vehicle charging and discharging infrastructure.

In addition, as an application example of a combination of JSON web signature and JSON web encryption, as shown in FIG. 22, the end-to-end security apparatus may, when a contact identifier (contID) 22a has a value of "1234," sign the value (<val>) with JWS in step S221, and encrypt the signed JWS value (contID-Sig:<s-hdr>.<val>.<sig>) 22b with a JSON web encryption (JWE) in step S223. According to this process, the end-to-end security apparatus may generate an element of an encrypted signed JWS value (contID-Sig-Enc:<e-hdr>.<ekey>.<iv>.<ctext>.<tag>) 22c.

Furthermore, the end-to-end security apparatus may decrypt the encrypted signed JWS value (contID-Sig-Enc:<e-hdr>.<ekey>.<iv>.<ctext>.<tag>) 22c in step S225 and remove the JWS signature from the decrypted signed JWS value (contID-Sig:<s-hdr>.<val>.<sig>) 22b in step S227. According to this process, the end-to-end security apparatus may obtain the original contact identifier whose JWE has been decrypted and whose JWS signature has been removed.

As such, in the management protocol of electric vehicle charging and discharging infrastructure according to the present exemplary embodiment, the end-to-end security method may include a JSON web signature, a JSON web encryption, or a combination thereof. In particular, by using double encryption in which a signed element is encrypted again, both confidentiality and integrity may be effectively secured in messages for billing using IEC 63110 messages or the like.

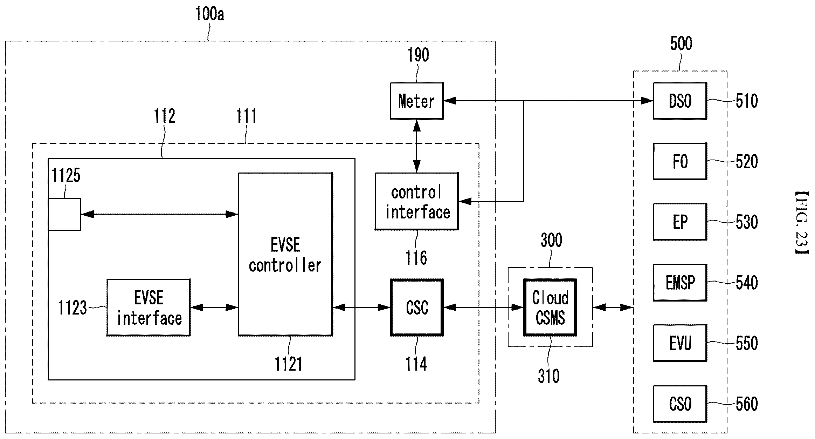

FIG. 23 is a schematic block diagram illustrating another form of a communication architecture capable of employing the end-to-end security method according to the present exemplary embodiment.

As shown in FIG. 23, the communication architecture includes a home network 100a serving as a smart grid connection point SGCP, a CSO backend 300, and a secondary actor 500. The home network 100a may correspond to a local network or a premises network in a specific area.

The home network 100a may include a charging station (CS) 111 and a meter 190. In the home network 100a, the CS 111 may include one or more electric vehicle supply equipment (EVSE) 112, one or more charging station controllers (CSC) 114 managing the EVSE 112, and a control interface 116. The CSC 114 may be a subsystem of the CS 110. The EVSE 112 may include an EVSE controller 1121, an EVSE interface 1123, and a plug 1125.

In addition, in the home network 100a, the CSC 114 may transmit and receive messages with a cloud CSMS 310 according to a protocol (hereinafter referred to as "management protocol") for managing electric vehicle charging and discharging infrastructure. The messages according to the management protocol may include JSON messages in accordance with the IEC 63110 specification.

The CSO backend 300 may include the cloud CSMS 310. The secondary actor 500 may include a DSO 510, an FO 520, an EP 530, an EMSP 540, an EVU 550, a CSO 560, etc. The cloud CSMS 310 and the secondary actor 500 may be substantially the same as the corresponding components described above with reference to FIG. 1.

In the end-to-end (E2E) security method of the present exemplary embodiment, in the message between the CSC 114 and the cloud CSMS 310, a signature may be added to the message or a portion thereof for E2E reliability, encryption may be applied to the message or a portion thereof for E2E confidentiality, or a signature may be added to the message or a portion thereof and the signed message or the signed portion thereof may be encrypted for both E2E reliability and confidentiality. The signature may be a JSON web signature (JWS), and the encryption may be a JSON web encryption (JWE).

According to this configuration of the end-to-end security method, it is possible to solve the problem in which security using TLS (transport layer security) in existing protocols for managing electric vehicle charging and discharging infrastructure may not ensure third-party-related end-to-end security, and thereby prevent losses due to hacking during billing processing caused by certain security issues of TLS.

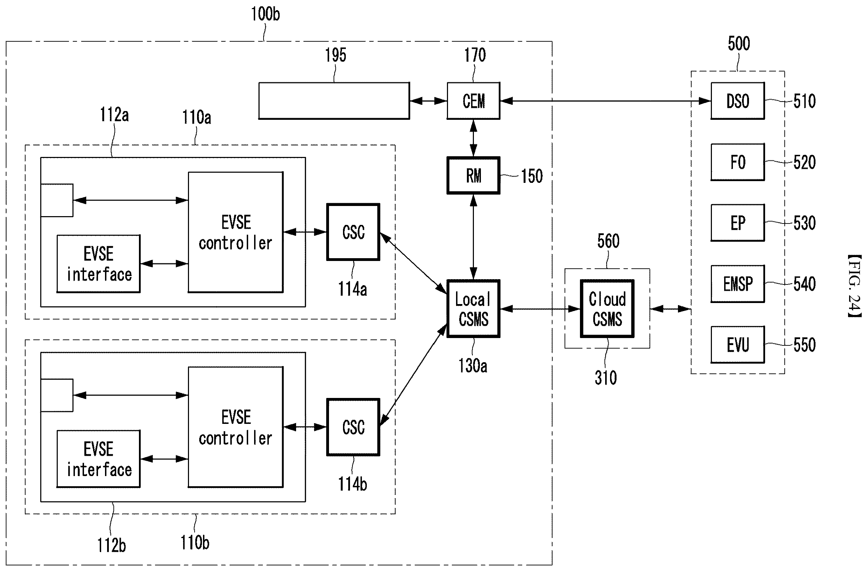

FIG. 24 is a schematic block diagram illustrating still another form of a communication architecture capable of employing the end-to-end security method according to the present exemplary embodiment.

As shown in FIG. 24, the communication architecture includes a home network 100b serving as a smart grid connection point (SGCP), a CSO 560, and a secondary actor 500. The home network 100b may correspond to a local network or a premises network of a specific region.

The home network 100b may include a first charging station 110a, a second charging station 110b, a local CSMS 130a, a resource manager (RM) 150, and a customer energy manager (CEM) 170. The home network 100b may include power-related devices 195, such as loads, an electricity production system, energy storage, etc.

In the home network 100b, the first CS 110a may include one or more first electric vehicle supply equipment (EVSE) 112a and one or more first CS controllers (CSC) 114a configured to manage the first EVSE 112a. The first CSC 114a may be a subsystem of the first CS 110a. The second CS 110b may include one or more second EVSE 112b and one or more second CSCs 114b configured to manage the second EVSE 112b. The second CSC 114b may be a subsystem of the second CS 110b. Each of the first EVSE 112a and the second EVSE 112b may include an EVSE controller, an EVSE interface, a plug, etc.

In the home network 100b, the local CSMS 130a may be connected to each of the first CSC 114a and the second CSC 114b via at least one of a wired, wireless, or satellite communication method. The local CSMS 130a may also be connected to the RM 150 and the cloud CSMS 310. The cloud CSMS 310 may be included in the CSO 560. The RM 150 may be connected to the CEM 170, and the CEM 170 may be connected to the secondary actor 500 and the power-related devices 195 in the premises. The secondary actor 500 may be connected to the local CSMS 130a via the CSO 560 and may include the DSO 510, the FO 520, the EP 530, the EMSP 540, and the EVU 550. Each component of the secondary actor 500 may be substantially the same as the corresponding component previously described with reference to FIG. 1.

As described above, the local CSMS 130a may exchange messages with the first CSC 114a, the second CSC 114b, and the cloud CSMS 310 according to a protocol for managing electric vehicle charging and discharging infrastructure. Such messages may include JSON messages according to the IEC 63110 standard.

In the end-to-end (E2E) security method of the present exemplary embodiment, for messages between the local CSMS 130a and the first CSC 114a, messages between the local CSMS 130a and the second CSC 114b, messages between the local CSMS 130a and the cloud CSMS 310, and messages between the local CSMS 130a and the resource manager (RM) 150, a signature may be applied to a message or a portion thereof for E2E reliability, encryption may be applied to a message or a portion thereof for E2E confidentiality, or a signature may be applied and the signed message or a portion thereof may be encrypted for both E2E reliability and confidentiality. The signature may be a JSON web signature (JWS), and the encryption may be a JSON web encryption (JWE).

According to this configuration of the end-to-end security method, it is possible to resolve a problem in which security using transport layer security (TLS) in an existing protocol for managing electric vehicle charging and discharging infrastructure may not ensure third-party-related end-to-end security. Therefore, it is possible to prevent losses caused by hacking during billing due to some security issues in TLS.

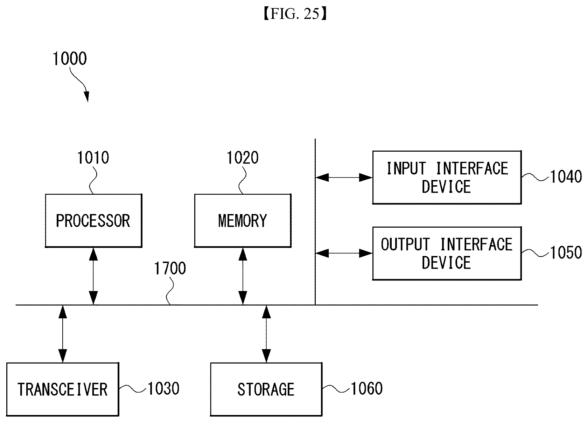

FIG. 25 is a schematic block diagram illustrating an end-to-end security apparatus according to another exemplary embodiment of the present disclosure.

As shown in FIG. 25, the end-to-end security apparatus 1000 may include at least one processor 1010 and a memory 1020. Additionally, the end-to-end security apparatus 1000 may further include at least one of a transceiver 1030, an input interface device 1040, an output interface device 1050, or a storage 1060. The components of the end-to-end security apparatus 1000 may be interconnected via a bus 1700 or dedicated interfaces.

The processor 1010 may execute program instructions stored in the memory 1020 and/or the storage 1060. The processor 1010 may be implemented by at least one central processing unit (CPU), graphics processing unit (GPU), or other processors capable of performing methods according to the present disclosure.

The memory 1020 may include non-volatile memory such as read-only memory (ROM) and volatile memory such as random access memory (RAM). The memory 1020 may load program instructions stored in the storage 1060 to be provided to the processor 1010.

The storage 1060, suitable for storing program instructions and data, may include magnetic media such as hard disks, floppy disks, and magnetic tapes; optical media such as CD-ROMs and DVDs; magneto-optical media such as floptical disks; and semiconductor memory such as flash memory, erasable programmable ROM (EPROM), or solid-state drives (SSD) based on these.

In this exemplary embodiment, certain elements within the electric vehicle charging and discharging infrastructure may communicate with each other via wired, wireless, satellite, or combinations thereof. Wireless communication may include wireless local area network (WLAN) communication based on Wi-Fi according to IEEE 802.11 standards. Additionally, wireless communication may include peer-to-peer signaling (P2PS) communication using low-frequency (LF) signals or low power excitation (LPE) signals. Furthermore, wireless communication may further include or alternatively use at least one of various communication methods such as Bluetooth, Zigbee, cellular, satellite communication, etc.

Moreover, end devices may exchange messages according to data representation formats based on extensible markup language (XML) or efficient XML interchange (EXI) to proceed with wireless power transfer (WPT) or charging processes. In electric vehicle charging and discharging procedures, to verify the identity of the electric vehicle or user and protect communication from unauthorized access, an end-to-end security channel may be established. The security channel may use transport layer security (TLS) as a default specification. The TLS session may be performed according to a TLS session establishment procedure after establishing a communication connection based on the internet protocol (IP).

Additionally, in the above-described exemplary embodiment, electric vehicle charging and discharging may include fast charging, slow charging, or combinations thereof. Slow charging may correspond to cases where the amount of power supplied per unit time is relatively less than that of fast charging.

Although the above-described exemplary embodiment focuses on end-to-end security in messages between the charging station controller (CSC) and the local charging station management system (CSMS), between the CSC and the cloud CSMS, between the local CSMS and the cloud CSMS, and between the local CSMS and the resource manager (RM), the present disclosure is not limited to such configurations. The end-to-end security of this exemplary embodiment may be extended to messages between the electric vehicle (EV) and the electric vehicle supply equipment (EVSE), between the EVSE and the charging station/charging station controller (CS/CSC), between the CS/CSC and the charging station operator/charging station management system (CSO/CSMS), between the CSO/CSMS and the customer service provider/market operator/energy provider/charging point operator (CSP/MO/EP/CPO), and between the CSP/MO/EP/CPO and the clearing house (CH), based on the security configurations in the aforementioned messages. For example, the end-to-end security of this exemplary embodiment may be applied to all or at least part of the channels connecting the EV, EVSE, CSC, CSMS/CSO, CSP/MO/EP/CPO, and CH in the described order or in reverse order, and when other secondary actors such as facility operators (FO) not described here participate, the end-to-end security method according to the exemplary embodiment of the present disclosure may also be applied to communication channels involving these secondary actors.

The methods described in the above exemplary embodiment can be implemented by computer-readable program codes or instructions stored on a computer-readable intangible recording medium. The computer-readable recording medium includes all types of recording device storing data which can be read by a computer system. The computer-readable recording medium may be distributed over computer systems connected through a network so that the computer-readable program or codes may be stored and executed in a distributed manner.

The computer-readable recording medium may include a hardware device specially configured to store and execute program instructions, such as a ROM, RAM, and flash memory. The program instructions may include not only machine language codes generated by a compiler, but also high-level language codes executable by a computer using an interpreter or the like.

Some aspects of the present disclosure described above in the context of the device may indicate corresponding descriptions of the method according to the present disclosure. That is, blocks or devices may correspond to operations of the method or features of the operations. Similarly, some aspects described in the context of the method may be expressed by features of blocks, items, or devices corresponding thereto. Some or all of the operations of the method may be performed by (or using) a hardware device such as a microprocessor, a programmable computer, or electronic circuits, for example. In some exemplary embodiments, one or more of the most important operations of the method may be performed by such a device.

In some exemplary embodiments, a programmable logic device such as a field-programmable gate array may be used to perform some or all of functions of the methods described herein. The field-programmable gate array may be operated with a microprocessor to perform one of the methods described herein.

The description of the disclosure may be merely exemplary in nature and, thus, variations that do not depart from the substance of the disclosure may be intended to be within the scope of the disclosure. Such variations may not be to be regarded as a departure from the spirit and scope of the disclosure. Thus, it will be understood by those of ordinary skill in the art that various changes in form and details may be made without departing from the spirit and scope as defined by the following claims.

**Claims**

1. An end-to-end security method by a first node of a communication architecture in a protocol for managing electric vehicle charging and discharging infrastructure, the end-to-end security method comprising:

   signing at least one key-value pair among elements in a body of a message to be delivered to a second node of the communication architecture; and
   transmitting the message including the at least one signed key-value pair to the second node.

2. The end-to-end security method of claim 1, wherein one of the at least one key-value pair includes a key as a header of the message and a value as a payload of the message.

3. The end-to-end security method of claim 2, further comprising: signing a key path for the at least one signed key-value pair.

4. The end-to-end security method of claim 3, wherein, in the signing of the key path, a key path value of the signed key path includes a path to a specific element in the body of the message, and a path to a specific sub-element of the specific element in the path to the specific element.

5. The end-to-end security method of claim 3, wherein at least one of the signing of the at least one key-value pair or the signing of the key path is performed using a digital certificate.

6. The end-to-end security method of claim 2, further comprising: adding a signed key to a protected header of the message.

7. The end-to-end security method of claim 6, wherein the signing of the at least one key-value pair includes binding the at least one signed key-value pair to the payload of the message.

8. The end-to-end security method of claim 7, wherein in the signing of the at least one key-value pair, a JSON (JavaScript Object Notation) web token is used.

9. The end-to-end security method of claim 2, further comprising: adding a signed key path to a protected header of the message.

10. The end-to-end security method of claim 1, further comprising: encrypting the at least one signed key-value pair using JSON (JavaScript Object Notation) web encryption.

11. The end-to-end security method of claim 1, wherein the first node or the second node comprises any one of:

a charging station controller (CSC) managing at least one electric vehicle supply equipment (EVSE);
a local charging station management system (CSMS) transmitting or receiving the message to or from the CSC;
a cloud CSMS transmitting or receiving the message to or from the CSC or the local CSMS; and
a resource manager (RM) transmitting or receiving the message to or from the CSC or the local CSMS.

12. An end-to-end security apparatus for performing end-to-end security in a communication architecture in a protocol for managing electric vehicle charging and discharging infrastructure, comprising:

at least one instruction for end-to-end security; and
a processor configured to perform the end-to-end security according to the at least one instruction,
wherein the processor is configured to perform:

signing at least one key-value pair among elements in a body of a message to be delivered to a second node of the communication architecture; and
transmitting the message including the at least one signed key-value pair to the second node.

13. The end-to-end security apparatus of claim 12,
wherein one of the at least one key-value pair includes a key as a header of the message and a value as a payload of the message.

14. The end-to-end security apparatus of claim 13, wherein the processor is further configured to perform: signing a key path for the at least one signed key-value pair.

15. The end-to-end security apparatus of claim 14, wherein a key path value of the signed key path includes a path to a specific element in the body of the message, and a path to a specific sub-element of the specific element in the path to the specific element.

16. The end-to-end security apparatus of claim 14, wherein the processor is further configured to perform at least one of signing the at least one key-value pair, or signing the key path using a digital certificate.

17. The end-to-end security apparatus of claim 13, wherein the processor is further configured to perform:
signing an entire header of the message or signing a range, which is a specific element in a protected header of the message.

18. The end-to-end security apparatus of claim 17, wherein the processor is further configured to perform:
binding the at least one signed key-value pair to a payload of the message.

19. The end-to-end security apparatus of claim 18, wherein the processor is further configured to perform:
signing the at least one key-value pair using a JSON (JavaScript Object Notation) web token.

20. The end-to-end security apparatus of claim 12, wherein the processor is further configured to perform:
encrypting the at least one signed key-value pair using JSON (JavaScript Object Notation) web encryption.

【FIG. 1】

【FIG. 2】

21          22          23

B64(<jose-header>).B64(<payload>).B64(<signature>)

【FIG. 3】

21a          22a          23a

eyJ0eXAiOiJKV1Qi.eyJyZWFzb24iOiJQb3.In1zZndkZmFnh6Y3Zl

【FIG. 4】

40

```
{
  "payload": "eyJyZWFzb24iOiJQb3",          22a
  "signatures": [
    {
      "header" : "typ":"JWT","x5t#S256":...,
      "protected": "eyJhbGciOiJFUzI1NiJ9",          21a
      "signature" : "In1zZndkZmFnh6Y3Zl"
    } ... ]          23a
}
```

【FIG. 5】

21a          22a

<signature>:=SIG(eyJhbGciOiJFUzI1NiJ9.eyJyZWFzb24iOiJQb3)

【FIG. 6】

60

```
{
  "payload" : "eyJyZWFzb24iOiJQb3",
  "header" : "typ":"JWT","x5t#S256":...,
  "protected" : "eyJhbGciOiJFUzI1NiJ9",
  "signature" : "In1zZndkZmFnh6Y3Zl"
}
```

22a
21a
23a

【FIG. 7】

70

```
[2,
  "19223201",
  "BootNotification",
  {
    "reason": "PowerUp",
    "chargingStation": {
        "model": "SingleSocketCharger",
        "cendorName": "VendorX"
    }
  }
]
```

【FIG. 8】

80

```
[3,
  "19223201",
  {
    "currentTime": "2013-02-01T20:53:32.486z"
    "interval": 300,
    "status": "Accepted"
  }
]
```

【FIG. 9】

90

```
[4,
  "162376037",
  "NotSupported",
  "SetDisplayMessageRequest not implemented",
  {}
]
```

【FIG. 10】

10

```
[2, "19223201", "BootNotification", "reason":"PowerUp", "chargingStation"="XYZ"]
```

【FIG. 11】

11

```
<protected header> := {
 "alg": "EC256"
 "OCPPAction": "BootNotification"
 "OCPPMessageTypeId": 2
 "x5t#S256": "YmFzZTYOdXJsKCBTSEEyNTYoPFNpZ25pbmctQ2VydGlmaW"
}
```

【FIG. 12】

12

[2, "19223201", "BootNotification-Signed", <SignedPayload>]

【FIG. 13】

13

```
<SignedPayload> = {
 "payload" : "eyJyZWFzb24iOiJQb3",
 "header" : {"typ":"JWT","x5t#S256":...,}
 "protected" : "eyJhbGciOiJFUzI1NiJ9",
 "signature" : "In1zZndkZmFnh6Y3Zl"
}
```

【FIG. 14】

14

```
{
    header: {
        "t": "2022-10-13T11",
        "action": "BootNotifReq",
        "id": "123-ABC-Req"
    },                                          141
    body: {
        "kpath" : "evse-.1.id",
        "due"        : {
                "type": "hard"
                "range": {
                    "start": 60
                    "end": 70
                    "unit": "minute"
                }
        }
        "method"      : "Reboot"
        "trigger" :
                "origin": "CSMS",
                "reason": [ "123", "124" ]
        }
    }
}
```

【FIG. 15】

14

```
{
    header: {
        "t": "2022-10-13T11",
        "action": "BootNotifReq",
        "id": "123-ABC-Req"
    },
    body: {
        "kpath" : "evse-.1.id",    | case 1
        "due"        : {
            "type": "hard"
            "range":                    | case 2
                "start": 60
                "end": 70
                "unit": "minute"
            }
        }
        "method"    : "Reboot"
        "trigger" :
            "origin": "CSMS",
            "reason": [ "123", "124" ]  | case 3
        }
    }
}
```

【FIG. 16】

14

```
{
    header: {
        "t": "2022-10-13T11",
        "action": "BootNotifReq",
        "id": "123-ABC-Req"
    },
    body: {
        "kpath" : "evse-.1.id",
        "due"      : {
            "type": "hard"
            "range": {
                "start": 60
                "end": 70
                    "unit": "minute"
            }
        }
        "method"    : "Reboot"
        "trigger" :
            "origin": "CSMS",
            "reason": [ "123", "124" ]
        }
    }
}
```

143

[FIG. 17]

**14a**

```
{
  header: {
      "t": "2022-10-13T11",
      "action": "BootNotifReq",
      "id": "123-ABC-Req"
  },
  body: {
      "kpath" : "evse-.1.id",
      "due"    : {
        "type": "hard"
        "range": {
            "start": 60
            "end": 70
            "unit": "min"
        }
        "expire": "789"
      }
      "trigger" :
        "origin": "CSMS",
        "reason": "123"
      }
    }
}
```

sign ⇒

**14b**

```
{
  header: {
      "t": "2022-10-13T11",
      "action": "BootNotifReq",
      "id": "123-ABC-Req"
  },
  body: {
      "kpath" : "evse-.1.id",
      "due"    : {
        "type": "hard"
        "range": {
            "start": 60
            "end": 70
            "unit": "min"
        }
        "expire": "789"
      }
      "trigger" :
        "origin": "CSMS",
        "reason-Signed": <JWS>
      }
    }
}
```

attack ⇒

**14c**

```
{
  header: {
      "t": "2022-10-13T11",
      "action": "BootNotifReq",
      "id": "123-ABC-Req"
  },
  body: {
      "kpath" : "evse-.1.id",
      "due"    : {
        "type": "hard"
        "range": {
            "start": 60
            "end": 70
            "unit": "min"
        }
        "expire-Signed": <JWS>
      }
      "trigger" :
        "origin": "CSMS",
        "reason": "789"
      }
    }
}
```

[FIG. 18]

18a

```
{
 header: {
     "t": "2022-10-13T11",
     "action": "BootNotifReq",
     "id": "123-ABC-Req"
 },
 body: {
     "kpath" : "evse-.1.id",
     "due"    : {
       "type": "hard"
       "range": {
           "start": 60
           "end": 70
           "unit": "min"
       }
       "reason": "789"
     }
     "trigger" :
       "origin": "CSMS",
       "reason": "123"
     }
   }
}
```

sign ⇒

18b

```
{
 header: {
     "t": "2022-10-13T11",
     "action": "BootNotifReq",
     "id": "123-ABC-Req"
 },
 body: {
     "kpath" : "evse-.1.id",
     "due"    : {
       "type": "hard"
       "range": {
           "start": 60
           "end": 70
           "unit": "min"
       }
     }
     "reason-Signed": <JWS>
   }
   "trigger" :
     "origin": "CSMS",
     "reason-Signed": <JWS>
   }
 }
}
```

attack ⇒

18c

```
{
 header: {
     "t": "2022-10-13T11",
     "action": "BootNotifReq",
     "id": "123-ABC-Req"
 },
 body: {
     "kpath" : "evse-.1.id",
     "due"    : {
       "type": "hard"
       "range": {
           "start": 60
           "end": 70
           "unit": "min"
       }
     }
     "reason-Signed": <JWS>
   }
   "trigger" :
     "origin": "CSMS",
     "reason-Signed": <JWS>
   }
 }
}
```

19

```
{
    header: {
        "t": "2022-10-13T11",
        "action": "BootNotifReq",
        "id": "123-ABC-Req"
    },
    body : {
        "kpath" : "evse-.1.id",
        "due"        : {
            "type": "hard"
            "range": {
                "start": 60
                "end": 70
                "unit": "min"
            }
            "reason":"789"
        }
    "trigger" : {
        "origin": "CSMS",
        "reason" : "123"
    }
    }
}
```

【FIG. 20a】

20

```
"contractID": "123"
 →
"contractID-Enc": "B64(<header>)..B64(<IV>).B64(<ciphertext>).B64(<tag>)"
<header> = {
    "typ": "JWT",
    "alg": "ECDH-ES",
    "enc": "A256GCM",
    "<enc-key>": "<key>",
    "epk": "kty": "EC", "crv": "P-256", "x":"<x>", "y":"<y>"
    "apu": <apu>,
    "apv": <apv>
}
```

【FIG. 20b】

20a

```
{
  header: {
      "t": "2022-10-13T11",
      "action": "BootNotifReq",
      "id": "123-ABC-Req"
  },
  body: {
      "kpath" : "evse-.1.id",
      "contract" :
        "provider": "ABC",
        "contractID": "123"
      }
    }
}
```

sign

20b

```
{
  header: {
      "t": "2022-10-13T11",
      "action": "BootNotifReq",
      "id": "123-ABC-Req"
  },
  body: {
      "kpath" : "evse-.1.id",
      "contract" :
        "provider": "ABC",
        "contractID-Enc": "JWE"
      }
    }
}
```

【FIG. 21】

⟨key⟩:⟨val⟩ ——21a

S211—| Sign ⟨val⟩ to with JSW

⟨key⟩-Sig: ⟨JWS(val)⟩ ——21b

S212—| Encrypt ⟨JWS⟩

⟨key⟩-Sig-Enc: ⟨JWE(⟨JWS(val)⟩)⟩ ——21c

【FIG. 22】

contID : "1234" ——22a

S221—| |—S227

contID-Sig : ⟨s-hdr⟩⟨val⟩⟨sig⟩ ——22b

S223—| |—S225

contID-Sig-Enc : ⟨e-hdr⟩..⟨iv⟩⟨ctext⟩⟨tag⟩ ——22c

【FIG. 23】

【FIG. 24】

【FIG. 25】

1000

## INTERNATIONAL SEARCH REPORT

| International application No. |
| --- |
| **PCT/KR2024/003840** |

| A. | CLASSIFICATION OF SUBJECT MATTER |
| --- | --- |

**H04L 9/40**(2022.01)i

According to International Patent Classification (IPC) or to both national classification and IPC

| B. | FIELDS SEARCHED |
| --- | --- |

Minimum documentation searched (classification system followed by classification symbols)

H04L 9/40(2022.01); B60L 15/40(2006.01); B60L 53/30(2019.01); B60L 53/66(2019.01); B60L 55/00(2019.01); G09C 1/00(2006.01); H04L 9/08(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 전기차(electric vehicle), 충전(charging), 보안(security), 서명(signature), 메시지(message), 통신(communication)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | KR 10-2022-0166869 A (HUAWEI TECHNOLOGIES CO., LTD.) 19 December 2022 (2022-12-19) See claims 6-8; and figures 1-5. | 1,10-12,20 |
| A | | 2-9,13-19 |
| A | KR 10-2501522 B1 (KOREA ELECTRIC POWER CORPORATION) 23 February 2023 (2023-02-23) See paragraphs [0020]-[0034]; and figures 1-2. | 1-20 |
| A | KR 10-2020-0126339 A (HYUNDAI MOTOR COMPANY et al.) 06 November 2020 (2020-11-06) See claims 1-9; and figures 10-11. | 1-20 |
| A | JP 5755805 B2 (QUALCOMM INCORPORATED) 29 July 2015 (2015-07-29) See claims 1-14. | 1-20 |
| A | KR 10-2499018 B1 (NBSOLUTION, CO., LTD.) 13 February 2023 (2023-02-13) See paragraphs [0104]-[0115]; and figure 8. | 1-20 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **22 July 2024** | **23 July 2024** |

| Name and mailing address of the ISA/KR | Authorized officer |
| --- | --- |
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/003840**

| Patent document cited in search report | | | Publication date (day/month/year) | Patent family member(s) | | | Publication date (day/month/year) |
|---|---|---|---|---|---|---|---|
| KR | 10-2022-0166869 | A | 19 December 2022 | CN | 113525152 | A | 22 October 2021 |
| | | | | CN | 113525152 | B | 18 July 2023 |
| | | | | EP | 4119388 | A1 | 18 January 2023 |
| | | | | EP | 4119388 | A4 | 27 September 2023 |
| | | | | JP | 2023-522017 | A | 26 May 2023 |
| | | | | JP | 7457156 | B2 | 27 March 2024 |
| | | | | US | 2023-0030673 | A1 | 02 February 2023 |
| | | | | WO | 2021-208549 | A1 | 21 October 2021 |
| KR | 10-2501522 | B1 | 23 February 2023 | KR | 10-2020-0000960 | A | 06 January 2020 |
| | | | | KR | 10-2022-0129528 | A | 23 September 2022 |
| | | | | KR | 10-2022-0130074 | A | 26 September 2022 |
| | | | | KR | 10-2022-0130651 | A | 27 September 2022 |
| | | | | KR | 10-2022-0132495 | A | 30 September 2022 |
| | | | | KR | 10-2022-0132496 | A | 30 September 2022 |
| | | | | KR | 10-2022-0133149 | A | 04 October 2022 |
| | | | | KR | 10-2445858 | B1 | 22 September 2022 |
| | | | | KR | 10-2501520 | B1 | 23 February 2023 |
| | | | | KR | 10-2501521 | B1 | 23 February 2023 |
| | | | | KR | 10-2501523 | B1 | 23 February 2023 |
| | | | | KR | 10-2501524 | B1 | 23 February 2023 |
| | | | | KR | 10-2501526 | B1 | 23 February 2023 |
| KR | 10-2020-0126339 | A | 06 November 2020 | None | | | |
| JP | 5755805 | B2 | 29 July 2015 | CN | 103765857 | A | 30 April 2014 |
| | | | | CN | 103765857 | B | 09 June 2017 |
| | | | | CN | 203097435 | U | 31 July 2013 |
| | | | | EP | 2724516 | A1 | 30 April 2014 |
| | | | | EP | 2724516 | B1 | 22 November 2017 |
| | | | | JP | 2014-523579 | A | 11 September 2014 |
| | | | | KR | 10-1543445 | B1 | 12 August 2015 |
| | | | | KR | 10-2014-0027497 | A | 06 March 2014 |
| | | | | US | 2013-0160086 | A1 | 20 June 2013 |
| | | | | US | 9003492 | B2 | 07 April 2015 |
| | | | | WO | 2012-177812 | A1 | 27 December 2012 |
| KR | 10-2499018 | B1 | 13 February 2023 | None | | | |

Form PCT/ISA/210 (patent family annex) (July 2022)